# EUROPEAN PATENT APPLICATION

(11) **EP 4 832 160 A1**
(43) Date of publication of application: **28.10.2026**
(21) Application number: 24921787.8
(22) Date of filing: 23.12.2024
(51) Int. Cl.: H01M 10/613, H01M 10/625, H01M 10/6554, H01M 10/6556, H01M 10/655

(54) **HEAT EXCHANGE COMPONENT, BATTERY, AND ELECTRIC DEVICE**

(30) Priority: 02.02.2024 CN 202410153960
(71) Applicant: Contemporary Amperex Technology Co., Limited, Ningde, Fujian 352100 (CN)
(72) Inventor: SONG, Feiting, Ningde, Fujian 352100 (CN); WU, Qiaoyun, Ningde, Fujian 352100 (CN)
(74) Representative: Lorenz Seidler Gossel Part. mbB
(86) International application number: PCT/CN2024/141390
(87) International publication number: WO 2025/161765

(57) **Abstract**

The present application provides a heat exchange component, a battery, and an electric device. The heat exchange component includes a heat exchange plate and a support member. A heat exchange flow channel is provided inside the heat exchange plate. The support member is disposed in the heat exchange flow channel, and two ends of the support member are separately connected to a wall part of the heat exchange flow channel. By disposing the support member in the heat exchange flow channel, the pressure-bearing capacity of the heat exchange plate is improved, the problems in the prior art of blockage of the heat exchange component, low capacity of a heat exchange medium inside the heat exchange plate, and excessive weight of the heat exchange component, which are caused by using the solutions of increasing the wall thickness of the heat exchange flow channel and reducing the diameter of the heat exchange flow channel in order to maintain the pressure resistance of the heat exchange component, are mitigated, the heat exchange effect the heat exchange component and the reliability of the heat exchange component are improved, and the energy density of the battery is increased.

## Description

### CROSS-REFERENCE TO RELATED APPLICATION

The present application claims priority to Chinese Patent Application No. 202410153960.5, filed on February 2, 2024 and entitled "HEAT EXCHANGE COMPONENT, BATTERY, AND ELECTRIC DEVICE", the content of which is incorporated herein by reference in its entirety.

### TECHNICAL FIELD

The present application relates to the technical field of batteries, and in particular, to a heat exchange component, a battery, and an electric device.

### BACKGROUND

As power sources for pure electric vehicles, power batteries play a vital role in improving vehicle performance. The temperature characteristics of a battery directly affect the performance, lifespan, and durability of an electric vehicle. Therefore, it is crucial to provide the battery with a cooling system to control its temperature for the electric vehicle.

In the prior art, the cooling system in the battery includes a heat exchange plate member, and the heat exchange plate member and a cell exchange heat to maintain the heat stability of the cell. However, the heat exchange effect of the heat exchange plate member still needs to be improved.

### SUMMARY

In view of the above problems, the present application provides a heat exchange component, a battery, and an electric device, so as to improve a heat exchange effect of the heat exchange component.

In a first aspect, the present application provides a heat exchange component. The heat exchange component includes a heat exchange plate, a heat exchange flow channel being disposed inside the heat exchange plate, and the heat exchange flow channel being configured to accommodate a heat exchange medium; and a support member disposed in the heat exchange flow channel, two ends of the support member being separately connected to a wall part of the heat exchange flow channel.

In the solutions of the embodiments of the present application, the heat exchange component includes the heat exchange plate and the support member. The heat exchange flow channel is provided inside the heat exchange plate. The support member is disposed in the heat exchange flow channel, and two ends of the support member are separately connected to a wall part of the heat exchange flow channel. By disposing the support member in the heat exchange flow channel, the pressure-bearing capacity of the heat exchange plate is improved, the problems in the prior art of blockage of the heat exchange component, low capacity of the heat exchange medium inside the heat exchange plate, and excessive weight of the heat exchange component, which are caused by using the solutions of increasing the wall thickness of the heat exchange flow channel and reducing the diameter of the heat exchange flow channel in order to maintain the pressure resistance of the heat exchange component, are mitigated, the heat exchange effect of the heat exchange component and the reliability of the heat exchange component are improved, and the energy density of a battery is increased.

In some embodiments, at least part of the support member is provided with a flow-disturbing structure.

In the technical solutions of the embodiments of the present application, by means of the flow-disturbing structure disposed on the support member, during the flow of the heat exchange medium, the flow-disturbing structure disrupts a laminar flow of the heat exchange medium, thereby improving the thermal conductivity of the heat exchange medium in the heat exchange flow channel, and improving the heat exchange effect of the heat exchange component.

In some embodiments, the heat exchange flow channel includes a main flow channel and branch flow channels that are in communication with the main flow channel, the branch flow channels are in communication with one another via the main flow channel, and the support member is disposed in at least one of the main flow channel and the branch flow channels.

In the technical solutions of the embodiments of the present application, the heat exchange flow channel includes the main flow channel and the branch flow channels that are in communication with the main flow channel, the branch flow channels are in communication with one another via the main flow channel. By disposing the support member in the main flow channel and/or the branch flow channel, the diameter of the main flow channel and/or the branch flow channel is increased while the main flow channel and/or the branch flow channel maintain sufficient pressure resistance, so as to improve the anti-blocking capability of the main flow channel and/or the branch flow channel and improve the heat exchange capability of the heat exchange component.

In some embodiments, the support member includes a first support member disposed in the main flow channel, the first support member includes a first connecting part and a second connecting part disposed opposite to each other, and the first connecting part and the second connecting part are separately connected to a wall part of the main flow channel.

In the technical solutions of the embodiments of the present application, the first support member is disposed in the main flow channel to improve the pressure resistance of the main flow channel. The first support member includes the first connecting part and the second connecting part disposed opposite to each other, and the first connecting part and the second connecting part are separately connected to the wall part of the main flow channel, such that the first support member serves to support the main flow channel via the first connecting part and the second connecting part.

In some embodiments, two second connecting parts are connected to two ends of the first connecting part in a first direction, respectively.

In the technical solutions of the embodiments of the present application, the two second connecting parts are connected to the two ends of the first connecting part in the first direction, respectively, so as to improve the connection reliability between the first support member and the heat exchange plate.

In some embodiments, one end of the second connecting part in the first direction abuts against the wall part of the main flow channel.

In the technical solutions of the embodiments of the present application, the one end of the second connecting part in the first direction abuts against the wall part of the main flow channel, such that the first support member can provide counterpressure to the heat exchange flow channel in the first direction, thereby improving the pressure resistance of the heat exchange flow channel.

In some embodiments, a plurality of first support members are spaced apart from one another in the main flow channel.

In the technical solutions of the embodiments of the present application, the plurality of first support members are spaced apart from one another in the main flow channel to reduce the obstruction to the heat exchange medium in the main flow channel caused by disposing the first support members in the main flow channel, reduce the manufacturing cost of the support members, and reduce the weight of the heat exchange component.

In some embodiments, the support member includes a second support member disposed in the branch flow channel, the second support member includes a body, a third connecting part, and a fourth connecting part, the third connecting part and the fourth connecting part are disposed at two ends of the body, respectively, and the body is connected to a wall part of the branch flow channel via the third connecting part and the fourth connecting part.

In the technical solutions of the embodiments of the present application, the second support member is disposed in the branch flow channel to improve the pressure resistance effect of the branch flow channel. The second support member includes the body, the third connecting part, and the fourth connecting part. The third connecting part and the fourth connecting part are disposed at the two ends of the body, respectively. The body is connected to the wall part of the branch flow channel via the third connecting part and the fourth connecting part, such that the second support member serves to support the main flow channel via the third connecting part and the fourth connecting part. In addition, the dimension of the second support member in the first direction is small, so as to reduce the difficulty of fitting the second support member with the branch flow channel.

In some embodiments, at least part of the second support member is provided with a flow-disturbing part.

In the technical solutions of the embodiments of the present application, the at least part of the second support member is provided with the flow-disturbing part. By means of the flow-disturbing part disposed on the second support member, during the flow of the heat exchange medium, the flow-disturbing part disrupts the laminar flow of the heat exchange medium, thereby improving the thermal conductivity of the heat exchange medium in the branch flow channel, and improving the heat exchange effect of the heat exchange component.

In some embodiments, the heat exchange plate includes a first panel configured to be in contact with a cell, the third connecting part is connected to the first panel, and the flow-disturbing part protrudes from the third connecting part.

In the technical solutions of the embodiments of the present application, the heat exchange plate includes the first panel configured to be in contact with the cell, the third connecting part is connected to the first panel, and the flow-disturbing part protrudes from the third connecting part. The flow-disturbing part protruding from the third connecting part serves to disturb the flow, thereby increasing a heat exchange area at the third connecting part, and improving the heat exchange effect of the heat exchange component.

In some embodiments, the body is provided with a hollow region, the flow-disturbing part is located in the hollow region, the flow-disturbing part includes a fixed end and a free end, the fixed end is connected to the body, and the free end is inclined in a thickness direction of the body, such that the free end is spaced apart from the hollow region.

In the technical solutions of the embodiments of the present application, the body is provided with the hollow region, the flow-disturbing part is located in the hollow region, the flow-disturbing part includes the fixed end and the free end, the fixed end is connected to the body, and the free end is inclined in the thickness direction of the body, such that the free end is spaced apart from the hollow region, and the hollow region of the body and the flow-disturbing part disposed in the hollow region both serve to disturb the flow, thereby achieving an effect of improving the heat exchange effect of the heat exchange component.

In some embodiments, in each branch flow channel, the second support member is provided in a continuously extending manner.

In the technical solutions of the embodiments of the present application, in the branch flow channel, the second support member is provided in the continuously extending manner to increase the heat exchange area of the heat exchange component and improve the heat exchange effect of the heat exchange component.

In some embodiments, the heat exchange plate includes a manifold region, and one main flow channel is in communication with at least two branch flow channels in the manifold region. The support member includes third support members, at least one third support member is located in the manifold region, the third support member extends in a first direction, and a straight line extending in the first direction intersects a length direction or a width direction of the heat exchange plate.

In the technical solutions of the embodiments of the present application, in the manifold region of the heat exchange plate, the one main flow channel is in communication with the at least two branch flow channels in the manifold region, and the main flow channel and the branch flow channels exchange a heat exchange medium in the manifold region. The support member includes the third support members, the at least one third support member is located in the manifold region, and the third support member serves to guide and distribute the flow. The third support member extends in the first direction, and the straight line extending in the first direction intersects the length direction or the width direction of the heat exchange plate. By adjusting the setting angle of the third support member, a flow rate of the heat exchange medium delivered from the main flow channel to the branch flow channels can be regulated, thereby allowing the heat exchange component to achieve a better heat exchange effect.

In some embodiments, the heat exchange plate includes two sub-plate members disposed opposite to each other, the two sub-plate members define, in an enclosing manner, a heat exchange chamber, the heat exchange flow channel is disposed in the heat exchange chamber, and a thickness L of at least one sub-plate member satisfies that 0.4 mm ≤ L ≤ 1.2 mm.

In the technical solutions of the embodiments of the present application, when the thickness L of the at least one sub-plate member of the heat exchange plate falls within the above range, the weight of the heat exchange component can be reduced while the heat exchange component has sufficient structural strength, thereby increasing the capacity of the heat exchange medium in the heat exchange plate, and improving the heat exchange effect of the heat exchange component.

In some embodiments, the thickness L of the sub-plate member satisfies that 0.8 mm ≤ L ≤ 1.2 mm.

In the technical solutions of the embodiments of the present application, when the thickness L of the sub-plate member falls within the above range, the structural strength of the heat exchange plate is further improved, and the service life of the heat exchange plate is prolonged.

In some embodiments, two ends of the support member in a thickness direction of the heat exchange plate are separately connected to a wall part of the heat exchange flow channel.

In the technical solutions of the embodiments of the present application, during use, the heat exchange flow channel is mainly subjected to pressure in the thickness direction thereof, so the support member extending in the thickness direction of the heat exchange plate can provide better support for the heat exchange flow channel.

In a second aspect, the embodiments of the present application provide a battery. The battery includes the heat exchange component according to the embodiments of the first aspect.

In a third aspect, the embodiments of the present application provide an electric device. The electric device includes the battery according to the embodiments of the second aspect.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic structural diagram of a vehicle according to an embodiment of the present application;
FIG. 2 is a schematic structural diagram of a battery pack according to an embodiment of the present application;
FIG. 3 is a schematic structural diagram of a battery module according to an embodiment of the present application;
FIG. 4 is an exploded view of a heat exchange component according to an embodiment of the present application;
FIG. 5 is a schematic diagram of part of a structure of a heat exchange component according to an embodiment of the present application;
FIG. 6 is a schematic structural diagram of a first support member of a heat exchange component according to an embodiment of the present application;
FIG. 7 is a schematic diagram of part of a structure of a heat exchange component according to an embodiment of the present application;
FIG. 8 is an enlarged schematic structural diagram of portion A in FIG. 7;
FIG. 9 is a schematic structural diagram of a support member/second support member of a heat exchange component according to an embodiment of the present application; and
FIG. 10 is an enlarged schematic structural diagram of portion B in FIG. 9.

Description of the reference numerals:
1: vehicle; 11: controller; 12: motor;
2: battery; 21: battery module; 22: case; 221: first case part; 222: second case part; 3: battery cell;
4: heat exchange component;
41: heat exchange plate; 42: heat exchange flow channel; 421: main flow channel; 422: branch flow channel; 431: input end; 432: output end; 441: first panel; 442: second panel; 411: manifold region;
45: support member; 46: first support member; 47: second support member; 461: first connecting part; 462: second connecting part; 471: third connecting part; 472: fourth connecting part; 473: body; 48: flow-disturbing structure; 474: hollow region; 49: third support member.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

It should be noted that unless otherwise specified, the technical or scientific terms used in the embodiments of the present application shall have ordinary meanings understood by those skilled in the art to which the embodiments of the present application belong.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In addition, the technical terms "first", "second", and the like are used for description only and are not to be construed as indicating or implying relative importance or to implicitly indicate the number of technical features indicated. In the description of the embodiments of the present application, unless otherwise specifically defined, "plurality of" means two or more.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

In the present application, battery cells may include lithium-ion secondary battery cells, lithium-ion primary battery cells, lithium-sulfur battery cells, sodium-lithium-ion battery cells, sodium-ion battery cells, magnesium-ion battery cells, etc., which are not limited in the embodiments of the present application. The battery cell may be cylindrical, flat, rectangular parallelepiped-shaped, or in other shapes. This is also not limited in the embodiments of the present application.

The battery mentioned in the embodiments of the present application refers to a single physical module including one or a plurality of battery cells to provide higher voltage and capacity. For example, the battery mentioned in the present application may include a battery module, a battery pack, or the like. The battery generally includes a case configured to encapsulate one or a plurality of battery cells. The case can prevent liquid or other foreign matter from affecting the charging or discharging of the battery cells.

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development. As power sources for pure electric vehicles, power batteries play a vital role in improving vehicle performance. The temperature characteristics of a battery directly affect the performance, lifespan, and durability of an electric vehicle. Therefore, it is crucial to provide the battery with a cooling system to control its temperature for the electric vehicle.

At present, the cooling system in the battery includes a heat exchange plate member, and the heat exchange plate member and a cell exchange heat to maintain the heat stability of the cell. However, the heat exchange effect of the heat exchange plate member still needs to be improved.

During use, both the inside and the outside of the heat exchange plate member may be subjected to excessive pressure. Therefore, in order to ensure the stable operation of the heat exchange plate member under a pressure environment, it is necessary to improve the pressure resistance of the heat exchange plate member. At present, the pressure resistance of the heat exchange plate member is often improved by reducing a flow channel ratio of the heat exchange plate member, increasing the wall thickness of the heat exchange plate member, and reducing the diameter of a heat exchange flow channel. However, this also leads to problems in that the heat exchange flow channel is prone to blockage, the heat exchange plate member becomes excessively heavy, and the heat exchange effect is inadequate.

Based on the above problems, the present application provides a heat exchange component. The heat exchange component includes a heat exchange plate and a support member. A heat exchange flow channel is provided inside the heat exchange plate. The support member is disposed in the heat exchange flow channel, and two ends of the support member are separately connected to a wall part of the heat exchange flow channel. By disposing the support member in the heat exchange flow channel, the pressure-bearing capacity of the heat exchange plate is improved, the problems in the prior art of blockage of the heat exchange component, low capacity of a heat exchange medium inside the heat exchange plate, and excessive weight of the heat exchange component, which are caused by using the solutions of increasing the wall thickness of the heat exchange flow channel and reducing the diameter of the heat exchange flow channel in order to maintain the pressure resistance of the heat exchange component, are mitigated, the heat exchange effect of the heat exchange component and the reliability of the heat exchange component are improved, and the energy density of the battery is increased.

The technical solutions described in the embodiments of the present application are applicable to electric devices using batteries.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

It should be understood that the technical solutions described in the embodiments of the present application are not limited to be applicable to the batteries and the electric devices described above. They are also applicable to all batteries that include the case, as well as electric devices using batteries. However, for brevity, the following embodiments are all illustrated using an electric vehicle as an example.

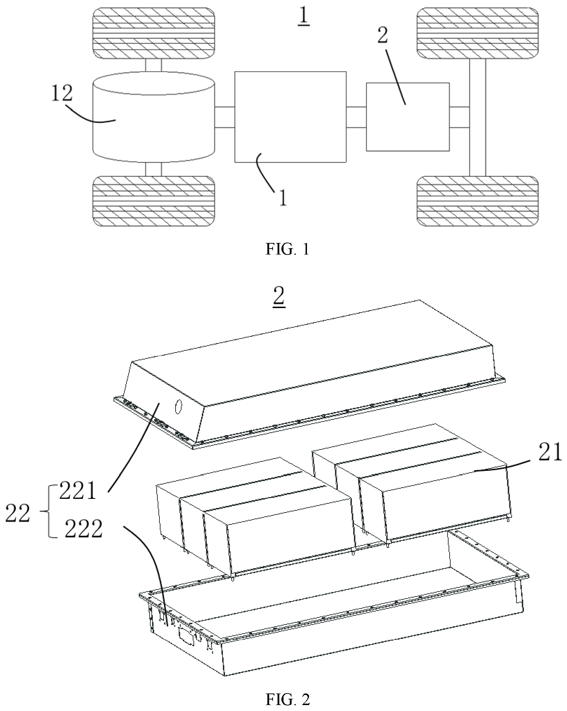

Referring to FIG. 1, FIG. 1 is a schematic structural diagram of a vehicle 1 according to some embodiments of the present application. The vehicle 1 may be a fuel vehicle, a gas vehicle, or a new energy vehicle, and the new energy vehicle may be a pure electric vehicle, a hybrid vehicle, an extended-range vehicle, or the like. A battery 2 is disposed inside the vehicle 1, and the battery 2 may be disposed at the bottom, head, or tail of the vehicle 1. The battery 2 may be configured to power the vehicle 1. For example, the battery 2 may serve as an operation power source for the vehicle 1. The vehicle 1 may further include a controller 11 and a motor 12. The controller 11 is configured to control the battery 2 to power the motor 12, e.g., for the operation power needed by the vehicle 1 for start-up, navigation, and driving.

In some embodiments of the present application, the battery 2 may not only serve as an operation power source for the vehicle 1, but also as a driving power source for the vehicle 1 to, replacing or partially replacing fuel or natural gas, provide driving power for the vehicle 1.

To meet different power usage requirements, the battery 2 may include a plurality of battery cells, and a battery cell refers to the smallest unit that forms a battery module or a battery pack. A plurality of battery cells may be connected in series and/or in parallel via electrode terminals to be applied in various application scenarios. The battery mentioned in the present application includes a battery module or a battery pack. The plurality of battery cells may be connected in series, in parallel, or in series-parallel. The series-parallel connection refers to a combination of series connection and parallel connection. In the embodiments of the present application, a plurality of battery cells can be directly assembled into a battery pack, or they can be first assembled into a battery module 21, and then the battery module 21 can be assembled into a battery pack.

FIG. 2 shows a schematic structural diagram of a battery 2 according to an embodiment of the present application.

As shown in FIG. 2, the battery includes a case 22 and a battery cell (not shown in the drawing). The battery cell is accommodated in the case 22.

The case 22 may be of a simple three-dimensional structure such as a single rectangular parallelepiped, cylinder, or sphere, or may also be of a complex three-dimensional structure composed of simple three-dimensional structures such as a rectangular parallelepiped, a cylinder, or a sphere, which is not limited in the embodiments of the present application. The case 22 may be made of an alloy material such as aluminum alloy and iron alloy, or a polymer material such as polycarbonate and polyisocyanurate foam plastic, or a composite material such as glass fiber plus epoxy resin, which is also not limited in the embodiments of the present application.

The case 22 is configured to accommodate the battery cell, and the case 22 may be of various structures. In some embodiments, the case 22 may include a first case part 221 and a second case part 222. The first case part 221 and the second case part 222 are mutually lidded, and the first case part 221 and the second case part 222 jointly define an accommodating space for accommodating the battery cell. The second case part 222 may be of a hollow structure with one end open, the first case part 221 is of a plate-like structure, and the open side of the second case part 222 is lidded with the first case part 221 to form the case 22 having the accommodating space. The first case part 221 and the second case part 222 may each be of a hollow structure with one side open, and the open side of the second case part 222 is lidded with the open side of the first case part 221 to form the case 22 having the accommodating space. Certainly, the first case part 221 and the second case part 222 may be in various shapes, such as a cylindrical shape and a rectangular parallelepiped shape.

To improve the sealing performance after the first case part 221 and the second case part 222 are connected, a sealing member, such as a sealant or a seal ring, may be further provided between the first case part 221 and the second case part 222.

If the top of the second case part 222 is lidded with the first case part 221, the first case part 221 may also be referred to as an upper case body, and the second case part 222 may also be referred to as a lower case body.

In the battery 2, one or a plurality of battery cells may be provided. If a plurality of battery cells are provided, the plurality of battery cells may be connected in series, in parallel, or in series-parallel. The series-parallel connection means that both series connection and parallel connection are present in the connection of the plurality of battery cells. The plurality of battery cells may be directly connected in series, in parallel, or in series-parallel, and then the whole formed by the plurality of battery cells is accommodated in the case 22. Certainly, the situation may be that the plurality of battery cells are first connected in series, in parallel, or in series-parallel to form battery modules 21, and then the plurality of battery modules 21 are connected in series, in parallel, or in series-parallel to form a whole and accommodated in the case 22.

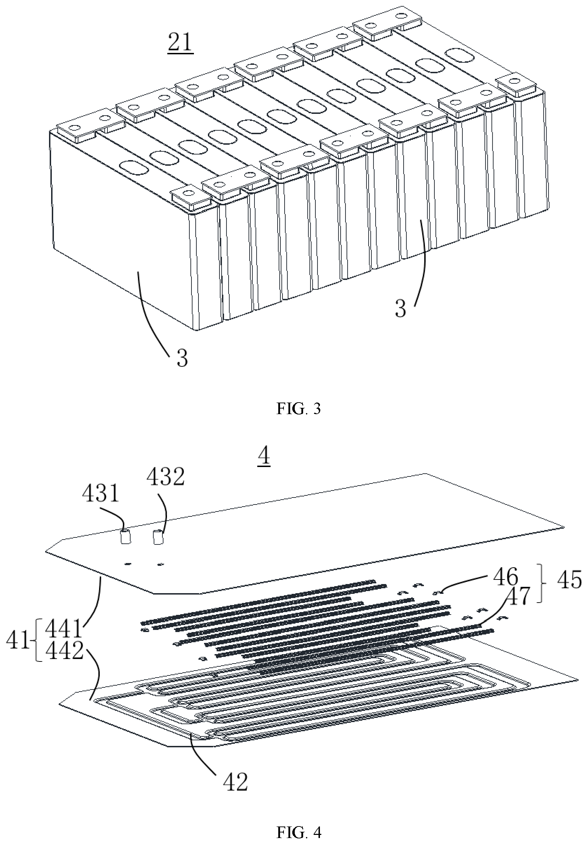

FIG. 3 shows a schematic structural diagram of a battery module 21 according to an embodiment of the present application.

In some embodiments, as shown in FIG. 3, a plurality of battery cells 3 are provided, and the plurality of battery cells 3 are first connected in series, in parallel, or in series-parallel to form the battery module 21. The plurality of battery modules 21 are then connected in series, in parallel, or in series-parallel to form a whole and accommodated in the case (not shown in the figure).

The plurality of battery cells 3 in the battery module 21 may be electrically connected via a busbar component to achieve parallel connection, series connection, or series-parallel connection among the plurality of battery cells 3 in the battery module 21.

In the present application, the battery cell 3 may include a lithium-ion battery cell, a sodium-ion battery cell, a magnesium-ion battery cell, or the like, which is not limited in the embodiments of the present application. The battery cell 3 may be cylindrical, flat, rectangular parallelepiped-shaped, or in other shapes, which is also not limited in the embodiments of the present application. According to the way of encapsulation, the battery cells 3 are generally divided into three types: cylindrical battery cells, prismatic battery cells, and pouch battery cells, which is also not limited in the embodiments of the present application. However, for brevity, the following embodiments are all illustrated using a prismatic battery cell as an example.

Referring to FIG. 4, FIG. 4 is an exploded view of a heat exchange component according to an embodiment of the present application.

In a first aspect, as shown in FIG. 4, the present application provides a heat exchange component 4. The heat exchange component 4 includes a heat exchange plate 41 and a support member 45. A heat exchange flow channel 42 is disposed inside the heat exchange plate 41, and the heat exchange flow channel 42 is configured to accommodate a heat exchange medium. The support member 45 is disposed in the heat exchange flow channel 42, and two ends of the support member 45 are separately connected to a wall part of the heat exchange flow channel 42.

In the solutions of the embodiments of the present application, the heat exchange component 4 includes the heat exchange plate 41 and the support member 45. The heat exchange flow channel 42 is provided inside the heat exchange plate 41. The support member 45 is disposed in the heat exchange flow channel 42, and two ends of the support member are separately connected to a wall part of the heat exchange flow channel 42. By disposing the support member 45 in the heat exchange flow channel 42, the pressure-bearing capacity of the heat exchange plate 41 is improved, the problems in the prior art of blockage of the heat exchange component 4, low capacity of the heat exchange medium inside the heat exchange plate 41, and excessive weight of the heat exchange component 4, which are caused by using the solutions of increasing the wall thickness of the heat exchange flow channel 42 and reducing the diameter of the heat exchange flow channel 42 in order to maintain the pressure resistance of the heat exchange component 4, are mitigated, the heat exchange effect of the heat exchange component 4 and the reliability of the heat exchange component 4 are improved, and the energy density of a battery is increased.

The heat exchange component 4 is applied in a battery. Illustratively, in practical applications, the heat exchange component 4 is arranged in a battery case 22 and is in contact with a battery cell in the case 22. The heat exchange component 4 further includes an input end 431 and an output end 432, and the input end 431 and the output end 432 are in communication with the heat exchange flow channel 42 and an external circulation device. The heat exchange component 4 is configured to exchange heat with the battery cell. Specifically, the heat exchange component 4 may heat or cool battery cells.

A plurality of heat exchange flow channels 42 are disposed inside the heat exchange plate 41. The heat exchange flow channels 42 extend linearly in a length or width direction of the heat exchange plate 41 member, and/or the heat exchange flow channels 42 extend in a curved manner. Illustratively, the heat exchange plate 41 includes the plurality of heat exchange flow channels 42 extending in the length direction of the heat exchange plate 41 and spaced apart from one another in the width direction of the heat exchange plate 41. Each heat exchange flow channel 42 is in communication with a manifold structure located outside the heat exchange plate 41, thereby allowing the heat exchange medium to be exchanged between the heat exchange flow channel 42 and an external environment via the manifold structure.

The support member 45 is disposed in the heat exchange flow channel 42 and is connected to the heat exchange plate 41 member by welding, thereby improving the connection reliability between the support member 45 and the heat exchange plate 41 member, and improving the sealing performance of the heat exchange plate 41 member. The shape of the support member 45 may be flexibly configured. Illustratively, the support member 45 is in a rod shape, and two ends of the rod-shaped support member 45 are connected to the heat exchange plate 41 member. Alternatively, the support member 45 is in a U shape, the support member 45 is in a Z shape, or the like. The support member 45 may be made of a metallic material or a polymer material.

The two ends of the support member 45 are separately connected to the wall part of the heat exchange flow channel 42, which means that two end parts of the support member 45 are in contact connection with the heat exchange plate 41 member, such that the support member 45 can serve to support the heat exchange flow channel 42, but it is not limited that there are two connection points between the support member 45 and the heat exchange flow channel 42. One end of the support member 45 may have a plurality of welding points with the heat exchange plate 41, and the numbers of welding points at the two ends of the support member 45 may be the same or different.

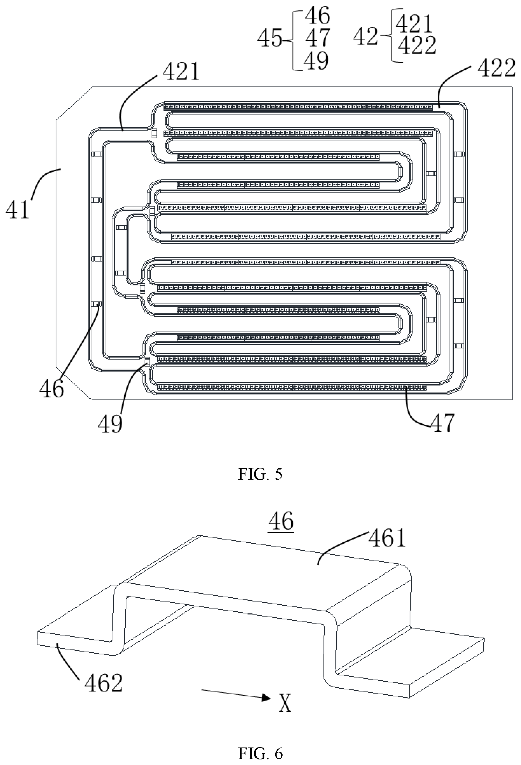

Referring to FIG. 5, FIG. 5 is a schematic diagram of part of a structure of a heat exchange component according to an embodiment of the present application.

In some embodiments, as shown in FIG. 5, the heat exchange flow channel 42 includes a main flow channel 421 and branch flow channels 422, the branch flow channels 422 are in communication with one another via the main flow channel 421, and the support member 45 is disposed in at least one of the main flow channel 421 and the branch flow channels 422.

In these embodiments, the heat exchange flow channel 42 includes the main flow channel 421 and the branch flow channels 422 that are in communication with the main flow channel, the branch flow channels 422 are in communication with one another via the main flow channel 421. By disposing the support member 45 in the main flow channel 421 and/or the branch flow channel 422, the diameter of the main flow channel 421 and/or the branch flow channel 422 is increased while the main flow channel 421 and/or the branch flow channel 422 maintain sufficient pressure resistance, so as to improve the anti-blocking capability of the main flow channel 421 and/or the branch flow channel 422 and improve the heat exchange capability of the heat exchange component 4.

The heat exchange flow channel 42 includes the main flow channel 421 and the branch flow channels 422, and the input end 431 and the output end 432 are both in communication with the main flow channel 421. The heat exchange medium enters the main flow channel 421 from the outside, and is then distributed into the branch flow channels 422 via the main flow channel 421. Specifically, the branch flow channels 422 extend in the length direction of the heat exchange plate 41 member, and the branch flow channels 422 are spaced apart in the width direction of the heat exchange plate 41 member. The main flow channel 421 is disposed at two ends of the heat exchange plate 41 member in the length direction and is connected to two ports of each branch flow channel 422, such that the branch flow channels 422 are in communication with one another via the main flow channel 421, and the heat exchange medium can circulate in the branch flow channels 422. The main flow channel 421 mainly serves to collect and transfer the heat exchange medium to the branch flow channels 422, and the battery cell mainly performs heat exchange in contact with the region of the branch flow channel 422.

If the support member 45 is disposed in at least one of the main flow channel 421 and the branch flow channel 422, the support member 45 may be disposed only in the main flow channel 421, or the support member 45 may be disposed only in the branch flow channel 422, or the support member 45 may be disposed in both the main flow channel 421 and the branch flow channel 422.

Referring to FIG. 6, FIG. 6 is a schematic structural diagram of a first support member of a heat exchange component according to an embodiment of the present application.

In some embodiments, as shown in FIGs. 5 and 6, the support member 45 includes a first support member 46 disposed in the main flow channel 421, the first support member 46 includes a first connecting part 461 and a second connecting part 462 disposed opposite to each other, and the first connecting part 461 and the second connecting part 462 are separately connected to a wall part of the main flow channel 421.

In these embodiments, the first support member 46 is disposed in the main flow channel 421 to improve the pressure resistance of the main flow channel 421. The first support member 46 includes the first connecting part 461 and the second connecting part 462 disposed opposite to each other, and the first connecting part 461 and the second connecting part 462 are separately connected to the wall part of the main flow channel 421, such that the first support member 46 serves to support the main flow channel 421 via the first connecting part 461 and the second connecting part 462.

The first support member 46 includes the first connecting part 461 and the second connecting part 462 disposed opposite to each other. The first support member 46 is connected to the heat exchange plate 41 by welding via the first connecting part 461 and the second connecting part 462. The first support member 46 may be in a rod shape or in a plate shape. Alternatively, several second connecting parts 462 are connected to the first connecting part 461, so as to improve the connection strength between the first support member 46 and the heat exchange plate 41.

Optionally, the first support member 46 extends in a first direction X to increase a contact area between the first connecting part 461 and the heat exchange plate 41 and improve the connection reliability between the first connecting part 461 and the heat exchange plate 41. The second connecting part 462 extends in the first direction X to increase a contact area between the second connecting part 462 and the heat exchange plate 41 and improve the connection reliability between the second connecting part 462 and the heat exchange plate 41. Two second connecting parts 462 extend facing each other or extend facing away from each other in the first direction X.

In some embodiments, as shown in FIGs. 5 and 6, the two second connecting parts 462 are connected to two ends of the first connecting part 461 in the first direction X, respectively.

In these embodiments, the two second connecting parts 462 are connected to the two ends of the first connecting part 461 in the first direction X, respectively, so as to improve the connection reliability between the first support member 46 and the heat exchange plate 41.

The second connecting parts 462 are disposed at two ends of the first support member 46 in the first direction X, respectively, and the first connecting part 461 and the second connecting parts 462 are connected via a connecting member extending in a thickness direction of the heat exchange plate 41 member. Illustratively, the first support member 46 is in an n shape, a u shape, or the like.

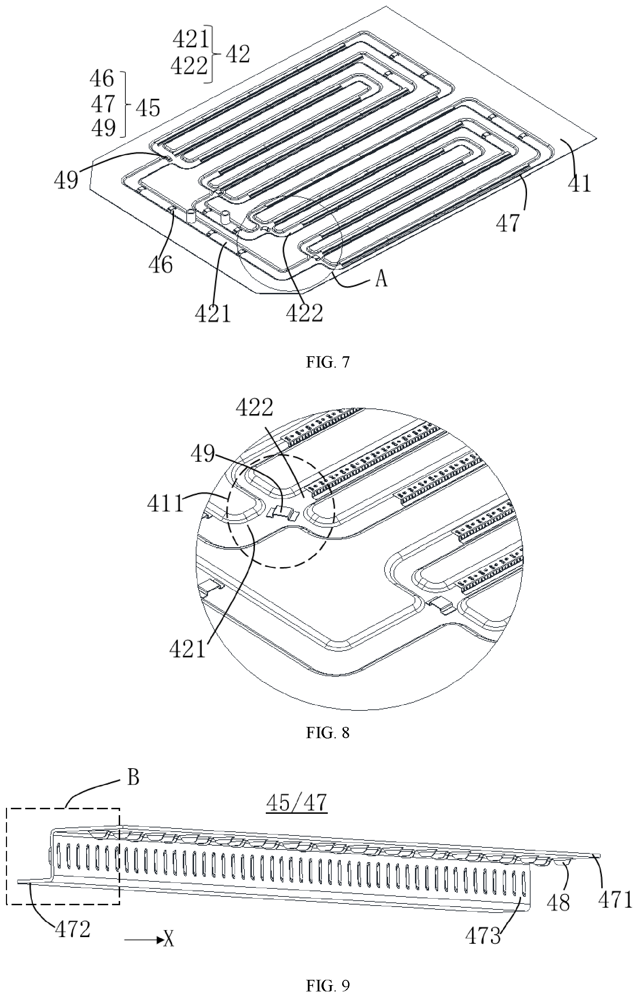

Referring to FIGs. 7 and 8, FIG. 7 is a schematic diagram of part of a structure of a heat exchange component according to an embodiment of the present application; and FIG. 8 is an enlarged schematic structural diagram of portion A in FIG. 7.

In some embodiments, as shown in FIGs. 7 and 8, the heat exchange plate 41 includes a manifold region 411, and one main flow channel 421 is in communication with at least two branch flow channels 422 in the manifold region 411. The support member 45 includes third support members 49, at least one third support member 49 is located in the manifold region 411, the third support member 49 extends in the first direction X, and a straight line extending in the first direction X intersects a length direction or a width direction of the heat exchange plate 41.

In these embodiments, in the manifold region 411 of the heat exchange plate 41, the one main flow channel 421 is in communication with the at least two branch flow channels 422 in the manifold region 411, and the main flow channel 421 and the branch flow channels 422 exchange a heat exchange medium in the manifold region 411. The support member 45 includes the third support members 49, the at least one third support member 49 is located in the manifold region 411, and the third support member 49 serves to guide and distribute the flow. The third support member 49 extends in the first direction X, and the straight line extending in the first direction X intersects the length direction or the width direction of the heat exchange plate 41. By adjusting the setting angle of the third support member 49, a flow rate of the heat exchange medium delivered from the main flow channel 421 to the branch flow channels 422 can be regulated, thereby allowing the heat exchange component 4 to achieve a better heat exchange effect.

Specifically, in the manifold region 411 of the heat exchange plate 41, the one main flow channel 421 is in communication with the at least two branch flow channels 422, and the heat exchange medium is distributed from the main flow channel 421 into the branch flow channels 422. The third support member 49 in the manifold region 411 is disposed between the main flow channel 421 and the branch flow channel 422. During the delivery of the medium, the third support member 49 can serve to block and guide the heat exchange medium. Therefore, during the manufacturing of the heat exchange component 4, the setting angle of the third support member 49 can be adjusted as needed to regulate the flow rate of the heat exchange medium distributed from the main flow channel 421 into main flow channels 421.

The arrangement where the straight line extending in the first direction X intersects the axis of the main flow channel 421 refers to the following: The first direction X is an extension direction of the third support member 49, and by adjusting an included angle between the third support member 49 and the length direction or the width direction of the heat exchange plate 41, i.e., by adjusting the setting angle of the third support member 49, the third support member 49 can serve to guide and distribute the flow. Illustratively, when the setting angle of the third support member 49 is adjusted, a line extending in the length direction or the width direction of the heat exchange plate 41 may be used as a reference line, and an included angle between an extension direction of the third support member 49 and the reference line may be adjusted. Specifically, the setting angle of the third support member 49 can be flexibly configured.

One heat exchange plate 41 may include a plurality of manifold regions 411, and included angles between third support members 49 in the manifold regions 411 and the reference line are the same or different.

Optionally, the structure of the third support member 49 and that of the first support member 46 or the second support member 47 may be the same or different. Alternatively, the third support member may be in a plate shape, a U shape, an N shape, or the like.

In some embodiments, as shown in FIGs. 5 and 6, one end of the second connecting part 462 in the first direction X abuts against the wall part of the main flow channel 421.

In these embodiments, the one end of the second connecting part 462 in the first direction X abuts against the wall part of the main flow channel 421, such that the first support member 46 can provide counterpressure to the heat exchange flow channel 42 in the first direction X, thereby improving the pressure resistance of the heat exchange flow channel 42.

Optionally, the two second connecting parts 462 extend facing away from each other in the first direction X. One end of the second connecting part 462 is connected to the second connecting part 462, and the other end of the second connecting part abuts against the wall part of the main flow channel 421, such that the first support member 46 can provide enhanced support to the main flow channel 421 in the first direction X.

In some embodiments, as shown in FIGs. 5 and 6, a plurality of first support members 46 are spaced apart from one another in the main flow channel 421.

In these embodiments, the plurality of first support members 46 are spaced apart from one another in the main flow channel 421 to reduce the obstruction to the heat exchange medium in the main flow channel 421 caused by disposing the first support members 46 in the main flow channel 421, reduce the manufacturing cost of the support members 45, and reduce the weight of the heat exchange component 4.

In comparison, the capacity of the main flow channel 421 is smaller than that of the branch flow channel 422. Therefore, the first support members 46 spaced apart from one another reduce the volume of the support members 45 in the main flow channel 421, so as to reduce the obstruction to the heat exchange medium in the main flow channel 421 caused by the first support members 46 and reduce the impact of the first support members 46 on the pressure drop of the heat exchange medium in the main flow channel 421.

Optionally, the plurality of first support members 46 are evenly distributed at equal distances to ensure uniform pressure resistance throughout the main flow channel 421.

Referring to FIG. 9, FIG. 9 is a schematic structural diagram of a second support member of a heat exchange component according to an embodiment of the present application.

In some embodiments, as shown in FIGs. 4 and 9, at least part of the support member 45 is provided with a flow-disturbing structure 48.

In these embodiments, by means of the flow-disturbing structure 48 disposed on the support member 45, during the flow of the heat exchange medium, the flow-disturbing structure 48 disrupts a laminar flow of the heat exchange medium, thereby improving the thermal conductivity of the heat exchange medium in the heat exchange flow channel 42, and improving the heat exchange effect of the heat exchange component 4.

Illustratively, the flow-disturbing structure 48 is a protrusion protruding from the support member 45, and/or the flow-disturbing structure 48 is a recess recessed from the support member 45. The shape of the protrusion may be rectangular, semicircular, dot-shaped, or the like. The nature of the recess may be semicircular, rectangular, strip-shaped, dot-shaped, or the like.

During the flow of the heat exchange medium inside the heat exchange flow channel 42, the heat exchange medium flows in a laminar manner, which increases the thermal resistance between the heat exchange medium and the heat exchange plate 41 during the heat exchange, resulting in a poor heat exchange effect of the heat exchange component 4. Therefore, in the embodiments of the present application, the support member 45 is provided with the flow-disturbing structure 48, such that when the heat exchange medium flows through the flow-disturbing structure 48, the flow-disturbing structure 48 disturbs the heat exchange medium to disrupt the laminar flow of the heat exchange medium, thereby improving the heat conduction effect of the heat exchange medium and improving the heat exchange effect of the heat exchange component 4.

In some embodiments, as shown in FIGs. 5 and 9, the support member 45 includes the second support member 47 disposed in the branch flow channel 422, the second support member 47 includes a body 473, a third connecting part 471, and a fourth connecting part 472, the third connecting part 471 and the fourth connecting part 472 are disposed at two ends of the body 473, respectively, and the body 473 is connected to a wall part of the branch flow channel 422 via the third connecting part 471 and the fourth connecting part 472.

In these embodiments, the second support member 47 is disposed in the branch flow channel 422 to improve the pressure resistance effect of the branch flow channel 422. The second support member 47 includes the body 473, the third connecting part 471, and the fourth connecting part 472. The third connecting part 471 and the fourth connecting part 472 are disposed at the two ends of the body 473, respectively. The body 473 is connected to the wall part of the branch flow channel 422 via the third connecting part 471 and the fourth connecting part 472, such that the second support member 47 serves to support the main flow channel 421 via the third connecting part 471 and the fourth connecting part 472. In addition, the dimension of the second support member 47 in the first direction X is small, so as to reduce the difficulty of fitting the second support member 47 with the branch flow channel 422.

Illustratively, the second support member 47 is in the shape of a straight rod, or the second support member 47 is in a C shape, a Z shape, or the like.

Optionally, the third connecting part 471 and the fourth connecting part 472 extend in a width direction of the branch flow channel 422 to increase a connection area between the second support member 47 and the heat exchange plate 41 and improve the connection reliability between the second support member 47 and the heat exchange plate 41. Illustratively, the third connecting part 471 and the fourth connecting part 472 extend in the same direction or in opposite directions.

In comparison, the width of a single main flow channel 421 is greater than that of a single branch flow channel 422. Therefore, in the width direction of the heat exchange flow channel 42, the width of the second support member 47 is smaller than the width direction of the first support member 46, so as to facilitate the assembly of the second support member 47 and the branch flow channel 422.

In some embodiments, as shown in FIGs. 5 and 9, at least part of the second support member 47 is provided with a flow-disturbing part.

In these embodiments, the at least part of the second support member 47 is provided with the flow-disturbing part. By means of the flow-disturbing part disposed on the second support member 47, during the flow of the heat exchange medium, the flow-disturbing part disrupts the laminar flow of the heat exchange medium, thereby improving the thermal conductivity of the heat exchange medium in the branch flow channel 422, and improving the heat exchange effect of the heat exchange component 4.

It should be noted that the flow-disturbing part disposed on the second support member 47 in the embodiments is the flow-disturbing structure 48 in the above embodiments, and the two are essentially the same.

Illustratively, the flow-disturbing part is a protrusion protruding from the second support member 47, and/or the flow-disturbing part is a recess recessed from the second support member 47. The shape of the protrusion may be rectangular, semicircular, dot-shaped, or the like. The nature of the recess may be semicircular, rectangular, strip-shaped, dot-shaped, or the like.

During the flow of the heat exchange medium inside the heat exchange flow channel 42, the heat exchange medium flows in a laminar manner, which increases the thermal resistance between the heat exchange medium and the heat exchange plate 41 during the heat exchange, resulting in a poor heat exchange effect of the heat exchange component 4. Therefore, in the embodiments of the present application, the second support member 47 is provided with the flow-disturbing part, such that when the heat exchange medium flows through the flow-disturbing part, the flow-disturbing part disturbs the heat exchange medium to disrupt the laminar flow of the heat exchange medium, thereby improving the heat conduction effect of the heat exchange medium and improving the heat exchange effect of the heat exchange component 4.

Optionally, the first support member 46 and the second support member 47 are both provided with flow-disturbing parts to improve the heat exchange effect of the heat exchange component 4.

In some embodiments, as shown in FIGs. 4, 5, and 9, the heat exchange plate 41 includes a first panel 441 configured to be in contact with a cell, the third connecting part 471 is connected to the first panel 441, and the flow-disturbing part protrudes from the third connecting part 471.

In these embodiments, the heat exchange plate 41 includes the first panel 441 configured to be in contact with the cell, the third connecting part 471 is connected to the first panel 441, and the flow-disturbing part protrudes from the third connecting part 471. The flow-disturbing part protruding from the third connecting part 471 serves to disturb the flow, thereby increasing a heat exchange area at the third connecting part 471, and improving the heat exchange effect of the heat exchange component 4.

The heat exchange plate 41 includes the first panel 441 and a second panel 442 that are connected by brazing. The first panel 441 is connected to the second panel 442, so as to form the heat exchange flow channel 42 between the first panel 441 and the second panel 442. The first panel 441 of the heat exchange plate 41 is in contact with the cell. Therefore, the flow-disturbing part is disposed on the third connecting part 471 connected to the first panel 441. By means of the flow-disturbing part provided in a protruding manner, the heat exchange area at the third connecting part 471 is increased, and the heat exchange effect of the heat exchange component 4 is improved.

Optionally, the third connecting part 471 and the fourth connecting part 472 are both provided with flow-disturbing parts, and the number of the flow-disturbing parts is increased to improve the flow-disturbing effectiveness of the second support member 47.

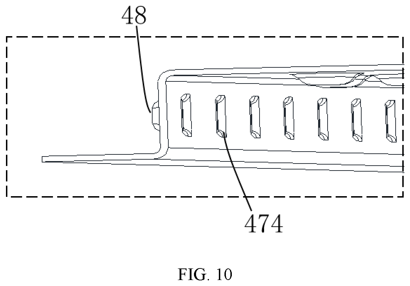

Referring to FIG. 10, FIG. 10 is an enlarged schematic structural diagram of portion B in FIG. 9.

In some embodiments, as shown in FIGs. 9 and 10, the body 473 is provided with a hollow region 474, the flow-disturbing part is located in the hollow region 474, the flow-disturbing part includes a fixed end and a free end, the fixed end is connected to the body 473, and the free end is inclined in a thickness direction of the body 473, such that the free end is spaced apart from the hollow region 474.

In these embodiments, the body 473 is provided with the hollow region 474, the flow-disturbing part is located in the hollow region 474, the flow-disturbing part includes the fixed end and the free end, the fixed end is connected to the body 473, and the free end is inclined in the thickness direction of the body 473, such that the free end is spaced apart from the hollow region 474, and the hollow region 474 of the body 473 and the flow-disturbing part disposed in the hollow region 474 both serve to disturb the flow, thereby achieving an effect of improving the heat exchange effect of the heat exchange component 4.

The body 473 is provided with several hollow regions 474, and free ends of flow-disturbing parts are spaced apart from the hollow regions 474, such that the flow-disturbing parts and the hollow regions 474 of the body 473 can both serve to disturb the flow. Specifically, the flow-disturbing part is integrally formed with the body 473, the fixed end of the flow-disturbing part is connected to the body 473, and the free end of the flow-disturbing part extends toward one side of the body 473 in the thickness direction, such that the flow-disturbing part protrudes from the surface of the body 473, and the protruding flow-disturbing part serves to disturb the flow. Since the free end of the flow-disturbing part is spaced apart from the hollow region 474, flow disturbance can be achieved at the hollow region 474 on both sides of the body 473 in the thickness direction.

Optionally, hollow regions 474 are evenly disposed at equal distances, such that the second support member 47 achieves a uniform flow-disturbing effect in the extension direction thereof. Illustratively, the hollow region 474 is in a circular shape, an elliptical shape, a rectangular shape, or the like.

In some embodiments, as shown in FIGs. 5 and 9, in each branch flow channel 422, the second support member 47 is provided in a continuously extending manner.

In these embodiments, in the branch flow channel 422, the second support member 47 is provided in the continuously extending manner to increase the heat exchange area of the heat exchange component 4 and improve the heat exchange effect of the heat exchange component 4.

Optionally, in a single branch flow channel 422, one second support member 47 is provided in a continuously extending manner to increase the surface area of the second support member 47 and increase the heat exchange area of the branch flow channel 422. In addition, the continuously extending second support member 47 also increases a connection area between the second support member 47 and the heat exchange plate 41 and improves the connection reliability between the second support member 47 and the heat exchange plate 41.

In some embodiments, as shown in FIG. 4, the heat exchange plate 41 includes two sub-plate members disposed opposite to each other, the two sub-plate members define, in an enclosing manner, a heat exchange chamber, the heat exchange flow channel 42 is disposed in the heat exchange chamber, and a thickness L of at least one sub-plate member satisfies that 0.4 mm ≤ L ≤ 1.2 mm.

In these embodiments, when the thickness L of the at least one sub-plate member of the heat exchange plate 41 falls within the above range, the weight of the heat exchange component 4 can be reduced while the heat exchange component 4 has sufficient structural strength, thereby increasing the capacity of the heat exchange medium in the heat exchange plate 41, and improving the heat exchange effect of the heat exchange component 4.

The sub-plate member in the embodiments is either the first panel 441 or the second panel 442 in the above embodiments.

Illustratively, the thickness of the sub-plate member may be 0.4 mm, 0.5 mm, 1 mm, or 1.2 mm.

In some embodiments, as shown in FIG. 4, the thickness L of the sub-plate member satisfies that 0.8 mm ≤ L ≤ 1.2 mm.

In these embodiments, when the thickness L of the sub-plate member falls within the above range, the structural strength of the heat exchange plate 41 is further improved, and the service life of the heat exchange plate 41 is prolonged.

Illustratively, the thickness of the sub-plate member may be 0.8 mm, 0.9 mm, 1 mm, or 1.2 mm.

Optionally, the thickness of each of the two sub-plate members ranges from 0.8 mm to 1.2 mm.

In some embodiments, as shown in FIGs. 4 and 5, two ends of the support member 45 in a thickness direction of the heat exchange plate 41 are separately connected to the wall part of the heat exchange flow channel 42.

In these embodiments, during use, the heat exchange flow channel 42 is mainly subjected to pressure in the thickness direction thereof, so the support member 45 extending in the thickness direction of the heat exchange plate 41 can provide better support for the heat exchange flow channel 42.

Optionally, the first connecting part 461 and the second connecting part 462 are disposed opposite to each other in the thickness direction of the heat exchange plate 41, and the third connecting part 471 and the fourth connecting part 472 are connected to two ends of the body 473 in the thickness direction of the heat exchange plate 41.

In a second aspect, the embodiments of the present application provide a battery. The battery includes the heat exchange component according to the embodiments of the first aspect.

The battery according to the embodiments of the present application uses the heat exchange component according to any one of the above embodiments, and therefore has the same technical effects, which will not be repeated here.

In a third aspect, the embodiments of the present application provide an electric device. The electric device includes the battery according to the embodiments of the third aspect.

The electric device according to the embodiments of the present application uses the battery according to the embodiments of the present application, and therefore has the same technical effects, which will not be repeated here.

In some embodiments, as shown in FIGs. 1 to 10, the heat exchange component 4 includes the heat exchange plate 41 and the support member 45. The heat exchange flow channel 42 is provided inside the heat exchange plate 41, the heat exchange flow channel 42 includes the main flow channel 421 and the branch flow channels 422 that are in communication with the main flow channel, one end of the main flow channel 421 is in communication with the at least two branch flow channels 422.

The support member 45 is disposed in the heat exchange flow channel 42, and the two ends of the support member in the thickness direction of the heat exchange plate 41 are separately connected to the wall part of the heat exchange flow channel 42. The support member 45 includes the first support member 46 disposed in the main flow channel 421 and the second support member 47 disposed in the branch flow channel 422. A plurality of first support members 46 are spaced apart from one another in the main flow channel 421. In each branch flow channel 422, the second support member 47 is provided in a continuously extending manner.

The first support member 46 includes the first connecting part 461 and the second connecting part 462 disposed opposite to each other. The first connecting part 461 and the second connecting part 462 are separately connected to the wall part of the main flow channel 421. The two second connecting parts 462 are connected to the two ends of the first connecting part 461 in the first direction X, respectively, and the two second connecting parts 462 abut against the wall part of the main flow channel 421 in the first direction X. The heat exchange plate 41 includes the manifold region 411, and the one main flow channel 421 is in communication with the at least two branch flow channels 422 in the manifold region 411. At least one first support member 46 is located in the manifold region 411, the first support member 46 extends in the first direction X, and the straight line extending in the first direction X intersects the axis of the main flow channel 421. The second support member 47 includes the body 473, the third connecting part 471, and the fourth connecting part 472. The third connecting part 471 and the fourth connecting part 472 are disposed at the two ends of the body 473, respectively. The body 473 is connected to the wall part of the branch flow channel 422 via the third connecting part 471 and the fourth connecting part 472. The heat exchange plate 41 includes the first panel 441 configured to be in contact with the cell, the third connecting part 471 is connected to the first panel 441, and the flow-disturbing part protrudes from the third connecting part 471. The body 473 is provided with the hollow region 474, the flow-disturbing part is located in the hollow region 474, the flow-disturbing part includes the fixed end and the free end, the fixed end is connected to the body 473, and the free end is inclined in the thickness direction of the body 473, such that the free end is spaced apart from the hollow region.

In the solutions of the embodiments of the present application, the heat exchange component 4 includes the heat exchange plate 41 and the support member 45. The heat exchange flow channel 42 is provided inside the heat exchange plate 41. The support member 45 is disposed in the heat exchange flow channel 42, and the two ends of the support member are separately connected to the wall part of the heat exchange flow channel 42. By disposing the support member 45 in the heat exchange flow channel 42, the pressure-bearing capacity of the heat exchange plate 41 is improved, the problems in the prior art of blockage of the heat exchange component 4, low capacity of the heat exchange medium inside the heat exchange plate 41, and excessive weight of the heat exchange component 4, which are caused by using the solutions of increasing the wall thickness of the heat exchange flow channel 42 and reducing the diameter of the heat exchange flow channel 42 in order to maintain the pressure resistance of the heat exchange component 4, are mitigated, the heat exchange effect of the heat exchange component 4 and the reliability of the heat exchange component 4 are improved, and the energy density of the battery 2 is increased.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A heat exchange component, comprising:
a heat exchange plate, a heat exchange flow channel being disposed inside the heat exchange plate, and the heat exchange flow channel being configured to accommodate a heat exchange medium; and
a support member disposed in the heat exchange flow channel, two ends of the support member being separately connected to a wall part of the heat exchange flow channel.

2. The heat exchange component according to claim 1, wherein at least part of the support member is provided with a flow-disturbing structure.

3. The heat exchange component according to claim 1 or 2, wherein the heat exchange flow channel comprises a main flow channel and branch flow channels that are in communication with the main flow channel, the branch flow channels are in communication with one another via the main flow channel, and the support member is disposed in at least one of the main flow channel and the branch flow channels.

4. The heat exchange component according to claim 3, wherein the support member comprises a first support member disposed in the main flow channel, the first support member comprises a first connecting part and a second connecting part disposed opposite to each other, and the first connecting part and the second connecting part are separately connected to a wall part of the main flow channel.

5. The heat exchange component according to claim 4, wherein two second connecting parts are connected to two ends of the first connecting part in a first direction, respectively.

6. The heat exchange component according to claim 5, wherein one end of the second connecting part in the first direction abuts against the wall part of the main flow channel.

7. The heat exchange component according to any one of claims 4 to 6, wherein a plurality of first support members are spaced apart from one another in the main flow channel.

8. The heat exchange component according to any one of claims 3 to 7, wherein the support member comprises a second support member disposed in the branch flow channel, the second support member comprises a body, a third connecting part, and a fourth connecting part, the third connecting part and the fourth connecting part are disposed at two ends of the body, respectively, and the body is connected to a wall part of the branch flow channel via the third connecting part and the fourth connecting part.

9. The heat exchange component according to claim 8, wherein at least part of the second support member is provided with a flow-disturbing part.

10. The heat exchange component according to claim 9, wherein the heat exchange plate comprises a first panel configured to be in contact with a cell, the third connecting part is connected to the first panel, and the flow-disturbing part protrudes from the third connecting part.

11. The heat exchange component according to claim 9 or 10, wherein the body is provided with a hollow region, the flow-disturbing part is located in the hollow region, the flow-disturbing part comprises a fixed end and a free end, the fixed end is connected to the body, and the free end is inclined in a thickness direction of the body, such that the free end is spaced apart from the hollow region.

12. The heat exchange component according to any one of claims 8 to 11, wherein in each branch flow channel, the second support member is provided in a continuously extending manner.

13. The heat exchange component according to any one of claims 3 to 12, wherein the heat exchange plate comprises a manifold region, and one main flow channel is in communication with at least two branch flow channels in the manifold region ,
the support member comprises third support members , at least one third support member is located in the manifold region, the third support member extends in a first direction, and a straight line extending in the first direction intersects a length direction or a width direction of the heat exchange plate.

14. The heat exchange component according to any one of claims 1 to 13, wherein the heat exchange plate comprises two sub-plate members disposed opposite to each other, the two sub-plate members define, in an enclosing manner, a heat exchange chamber, the heat exchange flow channel is disposed in the heat exchange chamber, and a thickness L of at least one sub-plate member satisfies that 0.4 mm ≤ L ≤ 1.2 mm.

15. The heat exchange component according to claim 14, wherein the thickness L of the sub-plate member satisfies that 0.8 mm ≤ L ≤ 1.2 mm.

16. The heat exchange component according to any one of claims 1 to 15, wherein two ends of the support member in a thickness direction of the heat exchange plate are separately connected to a wall part of the heat exchange flow channel.

17. A battery, comprising the heat exchange component according to any one of claims 1 to 16.

18. An electric device, comprising the battery according to claim 17.
